# EUROPEAN PATENT APPLICATION

(11) **EP 3 709 080 A1**
(43) Date of publication of application: **16.09.2020**
(21) Application number: 19174029.9
(22) Date of filing: 13.05.2019
(51) Int. Cl.: G03B 17/56

(54) **DOUBLE-RING LENS FILTER HOLDER**

(30) Priority: 14.03.2019 TW 108108635
(71) Applicant: Microview Technology Corp., Taoyuan City (TW)
(72) Inventor: HUANG, Tzu-Shang, Taoyuan City (TW)
(74) Representative: Boco IP Oy Ab

(57) **Abstract**

A double-ring lens filter holder has a slotted ring (10), an adapting ring (20) mounted around the slotted ring (10), and an adjusting ring (30) and a holding ring (60) mounted within the slotted ring (10). An inner filter (31) and a driving rod (50) are attached to the adjusting ring (30). An outer filter (61) is attached to the holding ring (60). When the outer filter (61) and the inner filter (31) are both polarizing filters, a user can rotate the outer filter (61) and the inner filter (31) simultaneously to adjust a polarizing effect. Then, the user can individually rotate the following inner filter (31) to adjust a dimming effect. The polarizing effect that has been set is not affected when adjusting the dimming effect.

## Description

This application is based upon and claims priority under 35 U.S.C. 119 from Taiwan Patent Application No. 108108635 filed on March 14, 2019, which is hereby specifically incorporated herein by this reference thereto.

### 1. Field of the Invention

The present invention relates to a lens filter holder, especially to a double-ring lens filter holder that can adjust filtering effect by adjusting relative angular position of two filters.

### 2. Description of the Prior Art(s)

A filter is an auxiliary photography device that is mounted in front of a lens. In addition to lens protection, the filter also absorbs light at different wavelengths to form special effects on images of photography works. Polarizing filters and neutral density filters are two types of filters that are commonly used.

The polarizing filter is mainly designed to exclusively allow light from particular optical axes to pass through the filter, which turns unpolarized natural light into polarized light. As a result, the polarizing filter eliminates the light reflected from places such as surfaces of non-metallic objects or water surface to brighten the color of the images.

The neutral density filter, by reducing the amount of light passing through the neutral density filter, allows users to reduce shutter speed of a camera, so as to produce photos with shallow depth of field even under strong light conditions.

A conventional lens filter holder, as shown in US patent with Pat. No. 10,146,061, comprises: a limiting ring; a lock ring mounted around a rear end of the limiting ring; and a fixed filter, an adjusting ring and a compression ring mounted within a space that is surrounded by the limiting ring. The fixed filter, the adjusting ring, and the compression ring are sequentially arranged from a rear end of the limiting ring to a front end of the limiting ring. The fixed filter is securely attached to the limiting ring and a rotary filter is attached to the adjusting ring. The lock ring may be connected with a camera lens. The adjusting ring along with the rotary filter can be driven to rotate relative to the limiting ring. The compression ring is detachably connected with the limiting ring, so as to hold the adjusting ring in the limiting ring and to prevent the adjusting ring from falling out of the limiting ring. When the conventional lens filter holder is in use, a user can simultaneously rotate the fixed filter and the rotary filer by rotating the limiting ring, or individually rotate the rotary filter that is disposed at a front side of the convention lens filter holder, so as to adjust filtering effect of the conventional lens filter holder.

To a professional photographer, when the fixed filter and the rotary filters are both polarizing filters, the light is polarized when passing through the rotary filter that is disposed at the front side of the conventional lens filter holder. Then by adjusting relative angular position of the rotary filter and the fixed filter, the amount of light that passes through the two filters can be adjusted. Accordingly, the conventional lens filter holder with the two polarizing filters provides both adjustable polarizing effect and adjustable dimming effect.

Since the conventional lens filter holder can only individually rotate the rotary filter that is disposed at a front side of the convention lens filter holder, in order to separately adjust the polarizing effect and the dimming effect, the user can only rotate the fixed filter and the rotary filter simultaneously to adjust the polarizing effect and then individually rotate the rotary filter to adjust the dimming effect. However, as the rotary filter that is disposed at the front side of the conventional lens filter holder is rotated, the polarizing effect is affected. Consequently, the user has to adjust the relative angular position of the rotary filter and the fixed filter repeatedly, which is troublesome.

The main objective of the present invention is to provide a double-ring lens filter holder that has a slotted ring, an adapting ring, an adjusting ring, an inner filter, a driving rod, a holding ring, and an outer filter.

The slotted ring has an inner radial ring portion extending radially, a rear axial ring portion axially extending from an inner annular edge of the inner radial ring portion to a rear of the slotted ring, a front axial ring portion axially extending from an outer annular edge of the inner radial ring portion to a front of the slotted ring, and an arc slot formed through the front axial ring portion.

The adapting ring is mounted around the inner radial ring portion and the rear axial ring portion of the slotted ring, and engages with the slotted ring.

The adjusting ring is rotatably mounted within a space that is surrounded by the front axial ring portion of the slotted ring. The inner filter rotatably is mounted within a space that is surrounded by the adjusting ring, and the inner filter is securely attached to the adjusting ring.

The driving rod is mounted through the arc slot of the slotted ring and is securely connected to the adjusting ring.

The holding ring is mounted within a space that is surrounded by the front axial ring portion of the slotted ring, and the holding ring is detachably connected with the front axial ring portion. The adjusting ring is held between the holding ring and the inner radial ring portion of the slotted ring. The outer filter is mounted within a space that is surrounded by the holding ring, and the outer filter is securely attached to the holding ring.

When the outer filter and the inner filter are both polarizing filters, a user can rotate the slotted ring to rotate the outer filter and the inner filter simultaneously, so as to adjust a polarizing effect formed by the outer filter. Then, as the polarizing effect has been set, the user pushes the driving rod to individually rotate the following inner filter, so as to adjust relative angular position of the inner filter and the outer filter and to adjust a dimming effect. Given the foregoing structure of the double-ring lens filter holder of the present invention, the polarizing effect that has been set is not affected when adjusting the dimming effect.

### IN THE DRAWINGS:

Fig. 1 is a partially enlarged cross-sectional side view of a double-ring lens filter holder in accordance with the present invention;
Fig. 2 is an exploded cross-sectional side view of the double-ring lens filter holder in Fig. 1;
Fig. 3 is an enlarged exploded cross-sectional side view of the double-ring lens filter holder in Fig. 1; and
Fig. 4 is an exploded perspective view of a slotted ring, an adjusting ring, an outer ring, and a driving of the double-ring lens filter holder in Fig. 1.

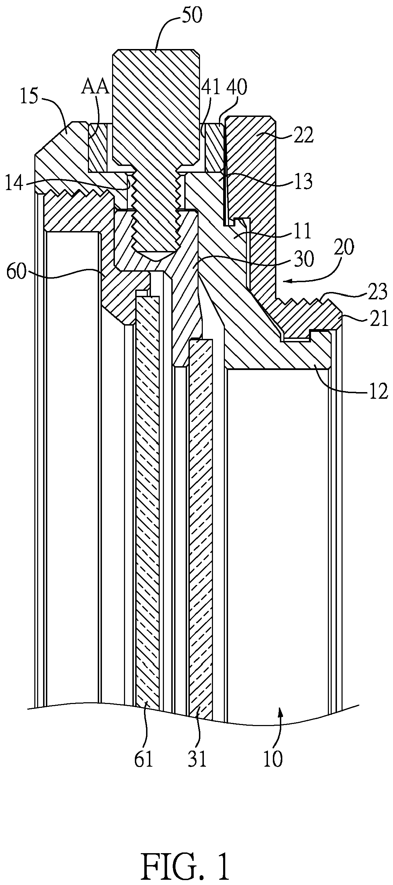

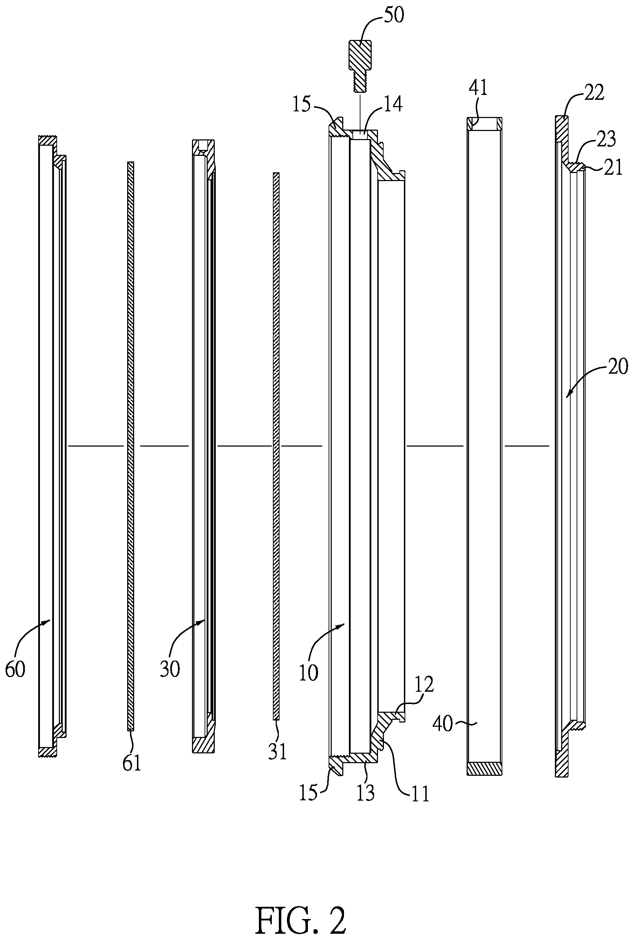

With reference to Figs. 1 and 2, a double-ring lens filter holder in accordance with the present invention comprises a slotted ring 10, an adapting ring 20, an adjusting ring 30, an inner filter 31, an outer cover ring 40, a driving rod 50, a holding ring 60, and an outer filter 61.

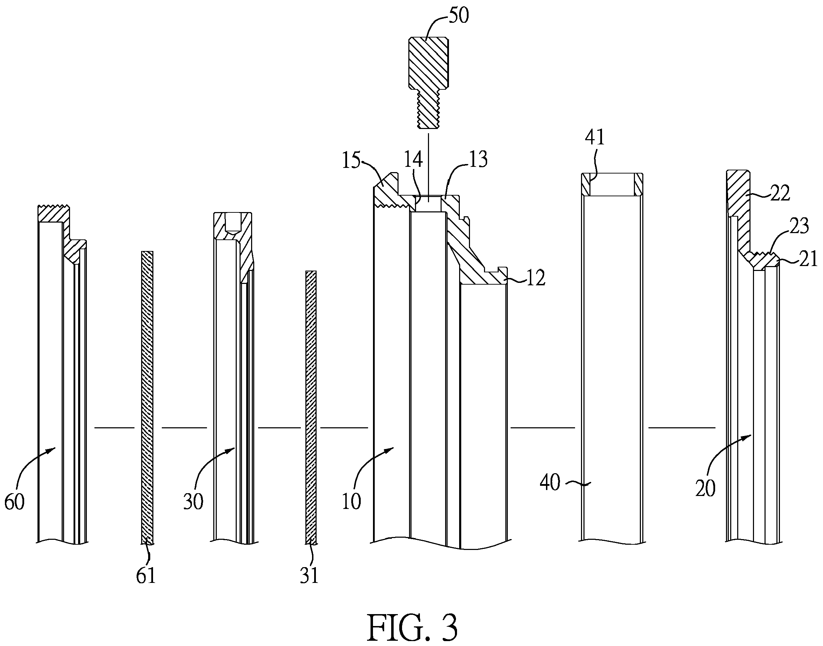

With further reference to Figs. 2 to 4, the slotted ring 10 has an inner radial ring portion 11, a rear axial ring portion 12, a front axial ring portion 13, an arc slot 14, and a stop protrusion 15.

The inner radial ring portion 11 extends radially and has an inner annular edge and an outer annular edge. The rear axial ring portion 12 axially extends from the inner annular edge of the inner radial ring portion 11 to a rear of the slotted ring 10. The front axial ring portion 13 axially extends from the outer annular edge of the inner radial ring portion 11 to a front of the slotted ring 10.

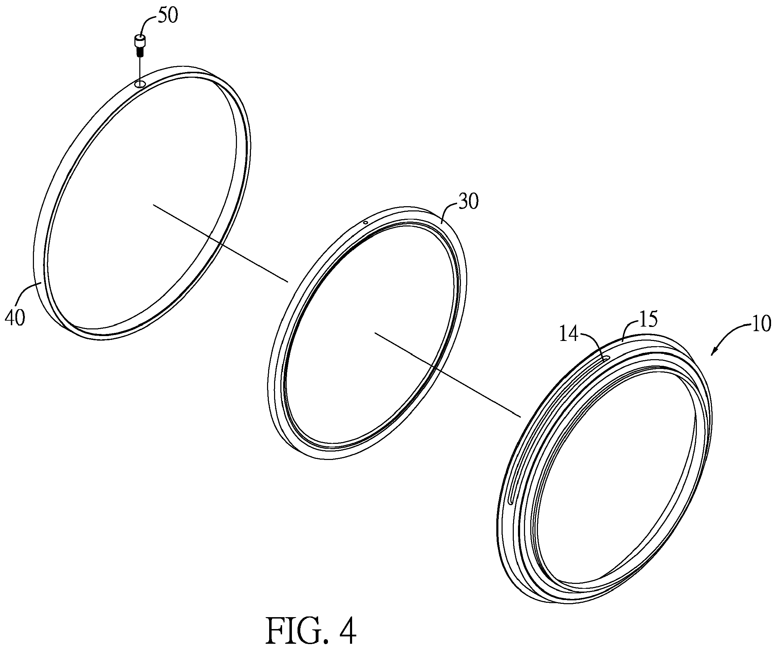

The arc slot 14 is formed through the front axial ring portion 13. A radian of the arc slot 14 is less than π/2. That is, the arc slot 14 subtends to a central angle that is less than 90 degrees. The stop protrusion 15 is formed on an outer annular surface of the front axial ring portion 13 and is disposed between the arc slot 14 and a front annular edge of the front axial ring portion 13. As shown in Fig. 4, in the preferred embodiment, the stop protrusion 15 is formed as a circle. However, in other embodiments, the stop protrusion 15 may be formed by multiple protrusions that are arranged in a circle.

The adapting ring 20 is mounted around the inner radial ring portion 11 and the rear axial ring portion 12 of the slotted ring 10, and engages with the slotted ring 10, such that the slotted ring 10 is capable of rotating relative to the adapting ring 20. The adapting ring 20 has a connection ring portion 21, an outer radial ring portion 22, and an outer thread 23.

The connection ring portion 21 extends axially and is mounted around the rear axial ring portion 12. The outer radial ring portion 22 radially extends from the connection ring portion 21 and is mounted around the inner radial ring portion 11. The outer radial ring portion 22 protrudes outwardly from the outer annular surface of the front axial ring portion 13. Accordingly, an annular recess AA is formed between the outer radial ring portion 22 and the stop protrusion 15. The arc slot 14 is disposed at a bottom of the annular recess AA.

The outer thread 23 is formed in an outer annular surface of the connection ring portion 21 and may engage with an inner thread formed inside a front portion of a camera lens for the double-ring lens filter holder to be mounted on the front portion of the camera lens.

The adjusting ring 30 is rotatably mounted within a space that is surrounded by the front axial ring portion 13 of the slotted ring 10. The inner filter 31 is rotatably mounted within a space that is surrounded by the adjusting ring 31, and the inner filter 31 is securely attached to the adjusting ring 30.

The outer cover ring 40 is rotatably mounted around the front axial ring portion 13 of the slotted ring 10 and in the annular recess AA and has a through hole 41. The through hole 41 is formed through the outer cover ring 40 and corresponds in position to the arc slot 14 of the slotted ring 10.

The driving rod 50 is mounted through the through hole 41 of the outer cover ring 40 and the arc slot 14 of the slotted ring 10 and is securely connected to the adjusting ring 30. By pushing the driving rod 50 to move along the arc slot 14, users can rotate the adjusting ring 30 and the inner filter 31. With the outer cover ring 40 covering the arc slot 14, dust can be prevented from entering an interior of the double-ring lens filter holder via the arc slot 14.

The holding ring 60 is mounted within a space that is surrounded by the front axial ring portion 13 of the slotted ring 10, and the holding ring 60 is detachably connected with the front axial ring portion 13. The adjusting ring 30 is held between the holding ring 60 and the inner radial ring portion 11 of the slotted ring 10. In the preferred embodiment, the holding ring 60 and the front axial ring portion 13 connects with each other via threads. The outer filter 61 is mounted within a space that is surrounded by the holding ring 60, and the outer filter 61 is securely attached to the holding ring 60.

The double-ring lens filter holder as described has the following advantages. When the outer filter 61 and the inner filter 31 are both polarizing filters, light is polarized when passing through the outer filter 61 and then is further dimmed when passing through the inner filter 31. Therefore, a user can rotate the slotted ring 10 to rotate the outer filter 61 and the inner filter 31 simultaneously, so as to adjust the polarizing effect formed by the outer filter 61. Then, as the polarizing effect has been set, the user pushes the driving rod 50 to individually rotate the following inner filter 31, so as to adjust relative angular position of the inner filter 31 and the outer filter 61 and to adjust the dimming effect. Given the foregoing structure of the double-ring lens filter holder of the present invention, the polarizing effect that has been set is not affected when adjusting the dimming effect.

## Claims

1. A double-ring lens filter holder comprising:
a slotted ring (10) having an inner radial ring portion (11) extending radially, a rear axial ring portion (12) axially extending from an inner annular edge of the inner radial ring portion (11) to a rear of the slotted ring (10), a front axial ring portion (13) axially extending from an outer annular edge of the inner radial ring portion (11) to a front of the slotted ring (10), and an arc slot (14) formed through the front axial ring portion (13);
an adapting ring (20) mounted around the inner radial ring portion (11) and the rear axial ring portion (12) of the slotted ring (10), and engaging with the slotted ring (10);
an adjusting ring (30) rotatably mounted within a space that is surrounded by the front axial ring portion (13) of the slotted ring (10);
a driving rod (50) mounted through the arc slot (14) of the slotted ring (10) and securely connected to the adjusting ring (30); and
a holding ring (60) mounted within a space that is surrounded by the front axial ring portion (13) of the slotted ring (10), and the holding ring (60) detachably connected with the front axial ring portion (13), wherein the adjusting ring (30) is held between the holding ring (60) and the inner radial ring portion (11) of the slotted ring (10); and the double-ring lens filter holder **characterized in** further comprising:
an inner filter (31) rotatably mounted within a space that is surrounded by the adjusting ring (31), and the inner filter (31) securely attached to the adjusting ring (30); and
an outer filter (61) mounted within a space that is surrounded by the holding ring (60), and the outer filter (61) securely attached to the holding ring (60).

2. The double-ring lens filter holder as claimed in claim 1, wherein
the slotted ring (10) further has a stop protrusion (15) formed on an outer annular surface of the front axial ring portion (13) and disposed between the arc slot (14) and a front annular edge of the front axial ring portion (13);
the adapting ring (20) has
a connection ring portion (21) extending axially and mounted around the rear axial ring portion (12); and
an outer radial ring portion (22) radially extending from the connection ring portion (21), mounted around the inner radial ring portion (11), and protruding outwardly from the outer annular surface of the front axial ring portion (13), wherein an annular recess (AA) is formed between the outer radial ring portion (22) and the stop protrusion (15);
the double-ring lens filter holder further comprises an outer cover ring (40), and the outer cover ring (40) is rotatably mounted around the front axial ring portion (13) of the slotted ring (10) and in the annular recess (AA) and has a through hole (41) formed through the outer cover ring (40); and
the driving rod (50) is mounted through the through hole (41) of the outer cover ring (40) and the arc slot (14) of the slotted ring (10) and is securely connected to the adjusting ring (30).

3. The double-ring lens filter holder as claimed in claim 1 or 2, wherein a radian of the arc slot (14) of the slotted ring (10) is less than π/2.

4. The double-ring lens filter holder as claimed in any one of claims 1 to 3, wherein the adapting ring (20) further has an outer thread (23) formed in an outer annular surface of the connection ring portion (21) of the adapting ring (20).
